# EUROPEAN PATENT SPECIFICATION

(11) **EP 3 680 208 B1**
(45) Date of publication and mention of the grant of the patent: **09.06.2021**
(21) Application number: 20159726.7
(22) Date of filing: 31.08.2017
(51) Int. Cl.: B66D 1/56, H02G 11/02

(54) **WINCH**
WINDE
TREUIL

(43) Date of publication of application: 15.07.2020
(62) Divisional of application: 19200338.2
(73) Proprietor: Volohovs, Dmitrijs, Riga 1082 (LV)
(72) Inventor: Volohovs, Dmitrijs, Riga 1082 (LV)
(74) Representative: Mooser, Sebastian Thomas

(56) References cited:
- JP-A- H08 192 995
- US-A- 2 637 525
- US-A- 4 042 213
- US-A1- 2005 179 020
- US-A1- 2007 290 180

## Description

### FIELD OF THE INVENTION

The present invention generally relates to a winch comprising one or more of an overwinding prevention unit, a load spin prevention device, a power supply board comprising substantially circular electrical contacts, a rope tension control unit, and a system comprising a said winch and a load, attached to the winch, having a load battery chargeable via the winch.

### BACKGROUND TO THE INVENTION

A winch apparatus is described, for example, in JP 2007-284174 A. The winch is used for winding and unwinding a cable. In this disclosure, a cylindrical and transparent casing for permeating light is built-in in a secondary cable guide supported on a cable guide arm. A light emitting diode for irradiating the secondary cable with light and a photo-diode for receiving the reflected light are provided on an outer periphery of the transparent casing. A black marker for absorbing the light is stuck onto the outer periphery of the secondary cable with a constant clearance in a longitudinal direction of the cable. A signal processing device is provided for detecting, by the photo-diode, that the reflected light from the secondary cable is interrupted by the marker when the secondary cable is passed through the secondary cable guide and calculating an operation amount, by the winch, of the secondary cable based on intervals of the marker detected.

Further prior art can be found in, for example, US 7,153,001 B2, which describes an auto lift ceiling lighting system in which the width of the left and right rotary drums is formed as wide as the width of the flat cable and the flat cable is winded stably and vertically on the outer surface of the winding core in the left and right rotary drums when winded by the motor, thereby not to be twisted. In the auto lift ceiling lighting system, the lamp can be turned on and off at any position and the flat cable supplying the electric power to the lamp is not twisted and the balance of the lamp is kept while the lamp ascends and descends.

Further prior art can also be found in US 4 042 213 A which generally relates to an electric hoist, in US 2 637 525 A which generally relates to a hoist limit mechanism, in JP

H08 192995 A which generally relates to an electric lifting device for lighting or audio equipment, in US 2007/290180 A1 which generally relates to a vehicle with on-board cargo handling system and in US 2005/179020 A1 which generally relates to a cable slack and guide monitoring apparatus and method for a lift device JP H08 192995 A discloses a lifting device comprising a winch according to the preamble of the independent claim 1.

However, there is a need for further improvements of winches.

### SUMMARY OF THE INVENTION

Winches according to the present invention are set out in the independent claims. Preferred embodiments of the winches are outlined in the dependent claims.

We describe a winch which comprises an overwinding prevention, OP, unit, wherein the OP unit comprises: an OP trigger for triggering preventing a load from being raised further by the winch; and an OP trigger activator, OPTA, moveable between a first OPTA position and a second OPTA position relative to the OP trigger; wherein the OP trigger is in a deactivated state when the OPTA is in the first OPTA position, and wherein the OP trigger is in an activated state, to trigger preventing the load from being raised further by the winch, when the OPTA is in the second OPTA position; and wherein the OPTA is contactable by the load such that the OPTA is moveable from the first OPTA position to the second OPTA position upon the load being raised by the winch.

According to the invention, once the load is being raised by the winch, the load (that is an object attached to the winch allowing for the object to be raised and/or lowered) eventually contacts the OPTA. When the load is being raised further, the OPTA may be pushed via the load from the first OPTA position to the second OPTA position. The load pushing the OPTA into the second OPTA position therefore results in the OP trigger being set to the activated state. This triggers preventing the winch from raising the load further, thereby preventing an overwinding which may otherwise, for example, result in the rope of the winch breaking.

In some example implementations, the OP trigger may be a switch which is switchable by the OPTA when being moved from the first OPTA position to the second OPTA position. Additionally or alternatively, the OP trigger may be part of an electric circuit, wherein the electric circuit may be closed upon the OPTA being in contact with the OP trigger. Alternative implementations of the OP trigger will be readily known to those skilled in the art.

The OPTA may, in some variants, comprise a pin which may be used to activate the OP trigger when the OPTA is moved from the first OPTA position to the second OPTA position. The pin may hereby be brought into direct contact with the load which is to be raised by the winch. Alternatively, the pin may be coupled to a first body of the OPTA, wherein the first body may, for example, provide for a larger surface which is contactable by the load to be raised by the winch. In this example implementation, the pin will be moved based on the load pushing the first body of the OPTA, such that the OP trigger may be activated when the OPTA has reached the second OPTA position.

In a further example implementation of the winch, the OP unit further comprises one or more resilient members (i.e. resilient OP unit members) configured to bias the OPTA towards the first OPTA position. In some variants, the one or more resilient members comprise one or more compression springs. The one or more resilient members may hereby allow for the OP unit, and in particular the OPTA of the OP unit to be in tight contact with the load at least in some positions of the OPTA. This may further increase stability regarding any alignment between the OP unit and the load in particular when the load is being raised or lowered by the winch.

The one or more resilient members may further provide a buffer insofar that the load is not being damaged when raised beyond a certain level.

According to the invention, the winch is configured to automatically lower the load upon activation of the OP trigger. This may be particularly advantageous as this may prevent one or both of the load from otherwise being damaged when raised beyond a certain level and the rope of the winch not experiencing a tension exceeding a certain, predetermined threshold when the winch further aims to wind the rope while the load may not be raised (or raisable) any further. An automatic lowering of the load upon activation of the OP trigger may therefore prevent any damages to the load and/or the rope.

According to the invention, the winch comprises a load spin prevention device which is configured to decouple the load to be raised by the winch from the rope of the winch. In some variants, the load spin prevention device may comprise one or more ball bearings. These one or more ball bearings may be placed in between a lock unit, which may be used to attach the load, and a support member such that the one or more ball bearings are prevented from sliding off the load spin prevention device. The load spin prevention device, by decoupling the load from the rope, allows for the load being held generally in a certain rotational position while being raised or lowered by the winch irrespective of whether the winding or unwinding of the rope in order to raise or lower the load, respectively, will result in a twisting of the rope.

We further describe a winch, particularly as outlined according to one or more of the above-specified implementations, which comprises an annular body which comprises a power supply board, wherein the power supply board comprises substantially circular electrical contacts contactable by a said load. This may be particularly advantageous in cases in which the load comprises a battery which may be charged via the winch, i.e. via an electric circuit comprised in the winch or coupled to the winch. Furthermore, as outlined above, the rope may twist when being wound or unwound by the winch. Therefore, providing a power supply board which comprises substantially circular electrical contacts may allow for establishing an electrical contact between the winch and the load irrespective of the relative angular position of the load with respect to the winch around an axis defined by the winch, i.e. the direction of the rope. As will be appreciated, even if the winch comprises a load spin prevention device to decouple the load from the rope, the load may still, at least by a small amount, rotate around the above-specified axis when the rope is being wound or unwound. This may be due to a certain friction between the load and the load holder of the winch (irrespective of their decoupling), which may enable transfer of a (potentially minimal) torque from the twisted rope to the load. Providing a power supply board which comprises substantially circular electrical contacts with therefore ensure an electrical contact to electrical contacts of the load also in a variant of the winch in which a load spin prevention device is used.

The power supply board may be integral to the printed circuit board as described throughout the present disclosure.

In further example implementations of the winch, the one or more resilient members are configured to stabilize the annular body upon the load being raised or lowered by the winch. In some variants, one resilient member may be arranged on either side of the annular body. In some other example implementations, two pairs of resilient members are exploited, in which, for each of the pairs, one resilient member is arranged on the annular body in an opposite direction to the second resilient member with respect to the axis defined by the rope of the winch. This may result in a particularly stable configuration.

In some variants, the winch further comprises a charging unit configured to charge a battery of the load via the circular electrical contacts. The charging unit may hereby be coupled to the substantially circular electrical contacts via a power supply wire. The charging unit may be controlled by a microcontroller which may be used to determine a charging level of the battery of the load.

We further describe a winch, particularly as outlined according to one or more of the above-specified implementations, which comprises a rope tension control, RTC, unit for determining a tension experienced by a rope of the winch, wherein the RTC unit comprises: an RTC trigger for triggering preventing the winch from further winding or unwinding the rope; and an RTC trigger activator, RTCTA, moveable between a first RTCTA position and a second RTCTA position relative to the RTC trigger; wherein the RTC trigger is in a deactivated state when the RTCTA is in the first RTCTA position, and wherein the RTC trigger is in an activated state, to trigger preventing the winch from further winding or unwinding the rope, when the RTCTA is in the second RTCTA position; and wherein the RTCTA is configured to move into the second RTCTA position when the tension experienced by the rope falls below a (predetermined) threshold tension.

In some examples, the RTC trigger comprises a switch which may be activated by an activation pin of the RTCTA.

Generally, the winch according to some example implementations as described herein may be arranged such that a rope guide wheel is movable between different positions based on the tension experienced by the rope. If the tension experienced by the rope falls below a certain predefined threshold, the RTCTA, which is coupled to the rope guide wheel, moves to the second RTCTA position in order to bring the RTC trigger into the activated state.

Variants of the winch may therefore allow, for example, for preventing the rope from jumping out of a rope drum during transportation of the winch or during any other scenario in which no or little load is attached to the winch and/or the power of the winch is switched off. The rope may hereby be automatically clamped, as will be further described below.

Furthermore, providing a winch with an RTC unit may allow for preventing the winch from starting to run without a load being attached to the winch, thereby preventing the rope from jumping out of the drum.

Providing a winch with an RTC unit may further allow stopping the winch from working (i.e. from, for example, winding or unwinding the rope) once the load touches the ground or another object during movement.

In some example implementations of the winch, the RTC unit further comprises a resilient RTC member configured to bias the RTCTA towards the second RTCTA position. In some variants, the resilient RTC member may be a compression spring. If no load or a load below a certain threshold is experienced by the winch, using the resilient RTC member may allow for activating the RTC trigger in order to, for example, stop the winch from winding or unwinding the rope to prevent the rope from jumping out of the rope drum, amongst other advantages as outlined above.

In some example implementations, the winch further comprises a rope guide wheel for guiding the rope of the winch and a stop member for clamping the rope between the rope guide wheel and the stop member when the RTCTA is in the second RTCTA position. This may be particularly advantageous insofar that the rope may be prevented from jumping out of the rope drum if the tension experienced by the rope falls below a certain predetermined threshold.

In some further variants of the winch, the stop member is movable between different stop member positions, relative to a position of the rope guide wheel, based on a diameter of the rope. This may allow for regulating the gap between the stop member and the rope guide wheel dependent on a diameter (or thickness in the direction away from the rope guide wheel) of the rope.

In some examples, the stop member may be a flat end screw, which may be particularly advantageous as it allows for easy adjustment of the position of the flat end screw relative to a position of the rope guide wheel (for a particular tension experienced by the rope).

In some further example implementations of the winch, the RTC trigger is arranged on a printed circuit board comprised in a support frame for supporting the RTC unit. This may allow for providing a particularly compact configuration of the winch which may be particularly useful for relatively small winches. All control electronics may hereby be located on the printed circuit board, including any triggers and/or switches specified throughout the present disclosure.

In some further variants of the winch, the RTC unit further comprises a rope deterioration detection unit configured to detect a deterioration of the rope based on an electrical contact being established between the stop member and the rope when the RTC trigger is in the deactivated state. This may be particularly advantageous as it may allow, for example, for replacing or repairing the rope if it is in a certain deteriorated state. This may also be advantageous as the load may otherwise fall if the rope were to break.

In some example implementations, the rope deterioration detection unit is further configured to stop the winch from winding or unwinding the rope and/or trigger an alarm upon detection of the electrical contact being established between the stop member and the rope when the RTC trigger is in the deactivated state. The alarm may comprise, for example, blinking of visual indicators, such as LEDs, or sending data to a central controller. In particular stopping the winch from winding or unwinding the rope further may allow for preventing the rope from breaking, thereby inhibiting the load from falling and being damaged.

We further describe a system comprising the winch according to any one of the above-specified implementations, in which the annular body comprising a power supply board is used, wherein the winch comprises a load holder, and wherein the system further comprises a load attached to the load holder. The load comprises load electrical contacts and a load battery. The system is configured, when the load is in contact with the OP unit, to charge the load battery based on the load electrical contacts being brought into contact with the substantially circular electrical contacts of the power supply board.

### BRIEF DESCRIPTION OF THE DRAWINGS

These and other aspects of the invention will now be further described, by way of example only, with reference to the accompanying figures, wherein like reference numerals refer to like parts, and in which:
Figures 1a and 1b show, respectively, front and side views of a schematic illustration of a winch according to some example implementations as described herein;
Figures 2a to 2c show schematic illustrations of an OP unit and a load attached to the winch according to some example implementations as described herein;
Figures 3a to 3c show further schematic illustrations of an OP unit according to some example implementations as described herein;
Figures 4a to 4h show schematic illustrations of an RTC unit according to some example implementations as described herein;
Figures 5a and 5b show schematic illustrations of a partially broken rope and a rope deterioration detection unit, respectively, according to some example implementations as described herein;
Figures 6a to 6c show schematic illustrations of a load spin prevention device according to some example implementations as described herein;
Figures 7a to 7d show various views of an object (load) according to some example implementations as described herein; and
Figure 8 shows a schematic illustration of parts of a system according to some example implementations as described herein.

### DETAILED DESCRIPTION OF PREFERRED EMBODIMENTS

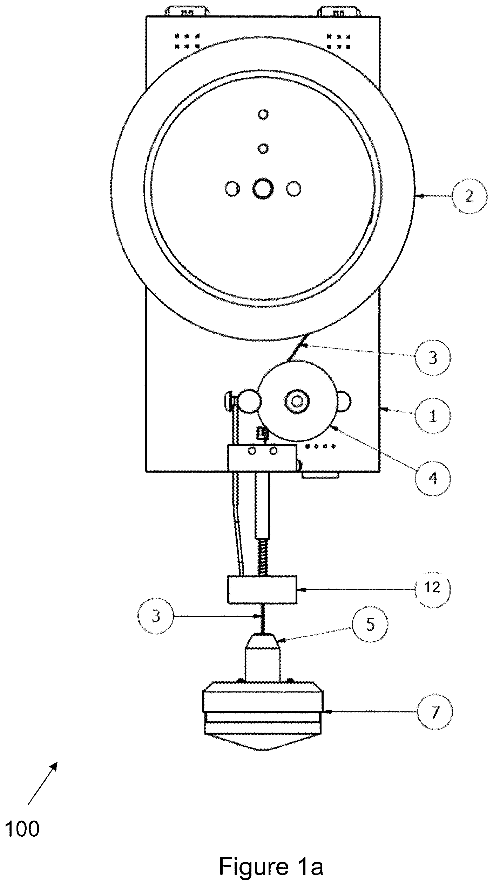

Figure 1a shows a front view of a schematic illustration of a winch 100 according to some example implementations as described herein.

In this example, the winch 100 comprises a support frame 1 and a rope drum 2 mounted on the support frame 1. The rope 3 can be wound or unwound onto the rope drum 2 by the winch 100.

A rope tension controller 4 is mounted, in this example, on the support frame 1.

An object (load) 7 is attached to the winch 100 via a load spin prevention device 5 which is, in this example, integral to a load holder.

An overwinding prevention, OP, unit, which comprises a first body 12, is arranged between the load spin prevention device 5 and the load 7 attached to the winch 100.

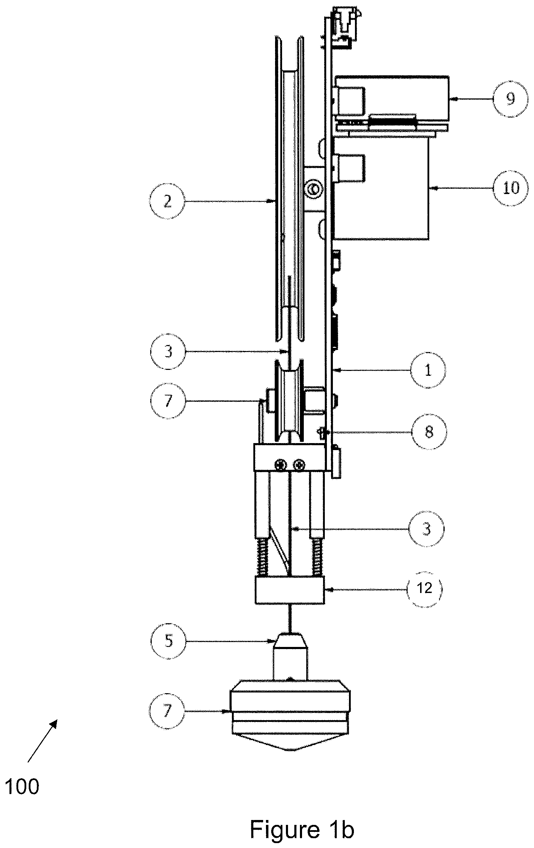

Figure 1b depicts a schematic side view of the winch 100.

As can be seen in Figure 1b, the OP unit comprises, in this example, a switch 8 which is used for triggering preventing the load 7 from being raised further by the winch 100.

The winch 100 further comprises a motor 9 and a gearbox 10.

The various features of the winch 100 will now be further described in more detail with reference to the accompanying drawings.

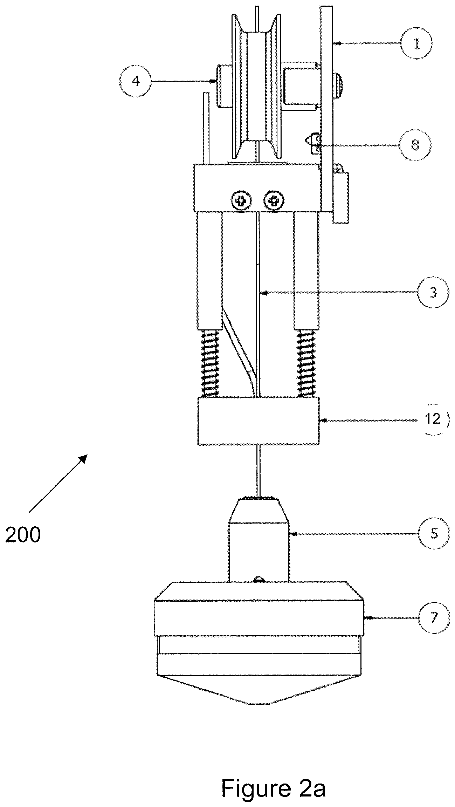

Figure 2a shows a schematic illustration of an OP unit 200 according to some example implementations as described herein.

In this example, the rope 3 passes from the rope drum 2 through the OP unit 200 to the load spin prevention device 5 to which the load (object) 7 is attached.

In Figure 2a, the winch is in a stage in which the object 7 is pulled up via the rope 3.

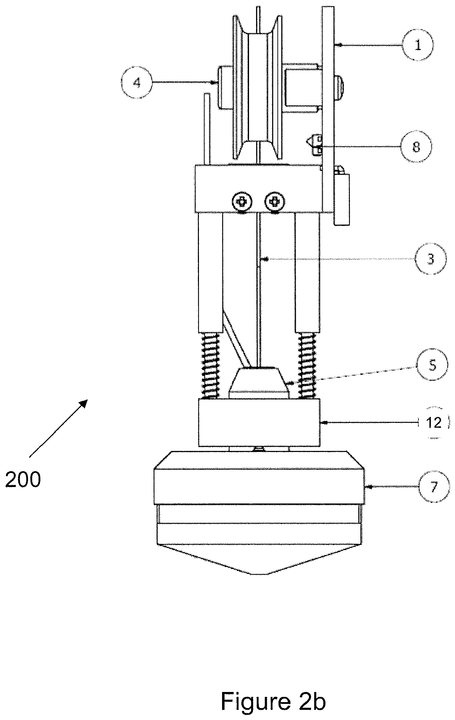

Figure 2b depicts a schematic illustration in which the object 7 is pulled up by the winch via the rope 3 to such an extent that the object 7 touches the first body 12 of the OP unit 200.

In this example, the first body 12 of the OP unit 200 comprises an annular body 12, the center of which is penetrable by the load spin prevention device 5.

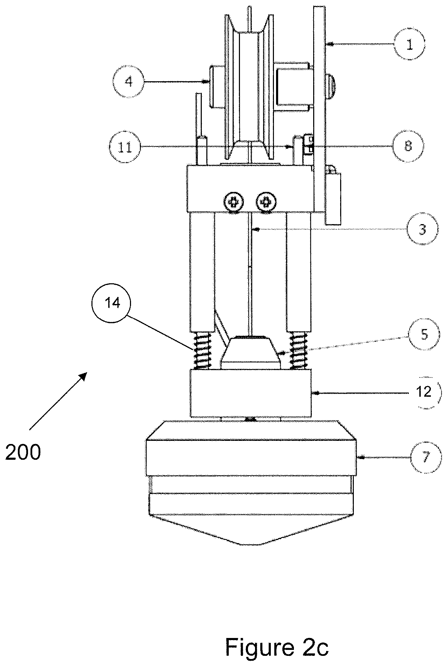

Figure 2c shows a schematic illustration in which the object 7 is raised further by the winch. By raising the object 7 to a position as shown in Figure 2c, activation pins 11 of the OP unit 200 will be pushed, in this example, upwards to such an extent that the switch 8 is being activated.

When the switch 8 is activated, a microcontroller will stop the upward movement, and will trigger a downward movement to release (inactivate) the switch 8.

Compression springs 14 of the OP unit 200 allow for the OP unit 200 to be in tight contact with the object 7.

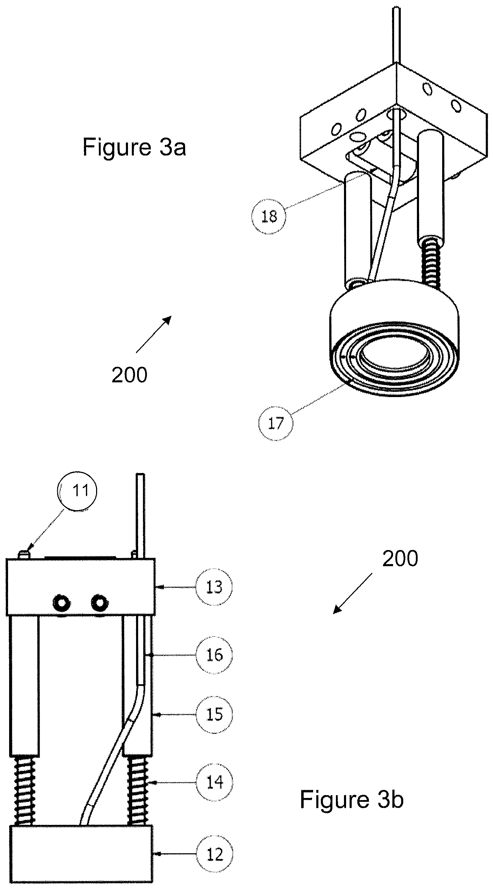

Figures 3a and 3b show, respectively, perspective and side views of a schematic illustration of the OP unit 200 according to example implementations as described herein.

As can be seen in Figure 3a, the OP unit 200 comprises, in this example, a rope roller 18. The first body 12 of the OP unit 200 comprises, on one of its surfaces, a power supply board 17.

As shown in Figure 3b, the OP unit 200 further comprises, in this example, a second body 13 through which the activation pins 11 can pass.

As outlined above, compression springs 14 are used in order to ensure that the OP unit 200 remains in tight contact with the object 7 for some positions of the OP unit 200 relative to the object 7.

The OP unit 200 further comprises, in this example, linear slides 15 for guiding the activation pins 11. Furthermore, a power supply wire 16 is provided, which allows for charging a battery of an object in contact with the OP unit 200 via the power supply board 17.

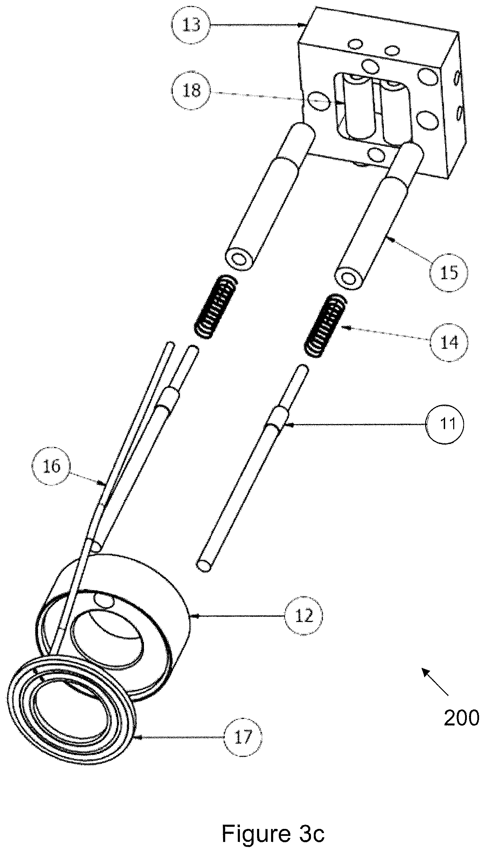

For further clarification, Figure 3c shows a schematic illustration of the OP unit 200 in which various features thereof are disconnected from each other.

It is to be noted that the switch 8 may be considered as being part of the OP unit 200 or as a separate feature of the winch which may be activated by the OP unit 200.

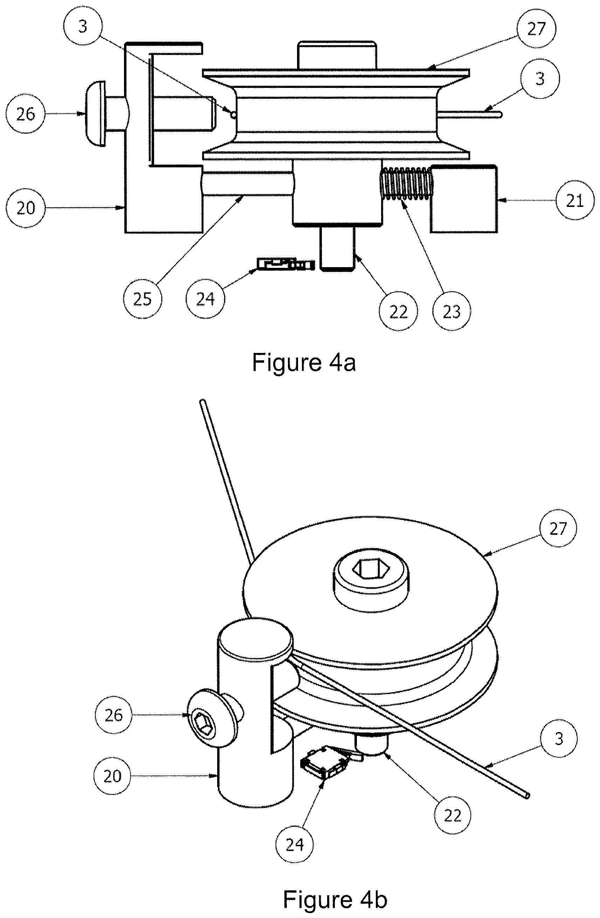

Figures 4a and 4b show, respectively, side and perspective views of a schematic illustration of parts of an RTC unit 400 according to some example implementations as described herein.

In this example, the RTC unit 400 comprises a first support 20 and a second support 21. A switch 24 of the RTC unit 400 is provided which allows, for example, for triggering the winch from trying to wind or unwind the rope 3 further.

In this example, a compression spring 23 is arranged between the second support 21 and a part of the RTC unit 400 which is coupled to the rope guide wheel 27. The compression spring 23 is configured to bias the rope guide wheel 27 towards the first support 20.

The switch 24 may be activated via the activation pin 22 of the RTC unit 400.

In this example, the rope guide wheel 27 may be guided towards the first support 20 via an axis 25 of the RTC unit 400.

In this example, the RTC unit 400 further comprises a flat end screw 26 which is configured, for example, as a stop member.

Figures 4a and 4b depict a scenario in which the RTC unit 400 is in a deactivated state, i.e. a state in which the rope 3 experiences a certain amount of tension. In the deactivated state of the RTC unit 400, there is a gap between the flat end screw 26 and the rope 3.

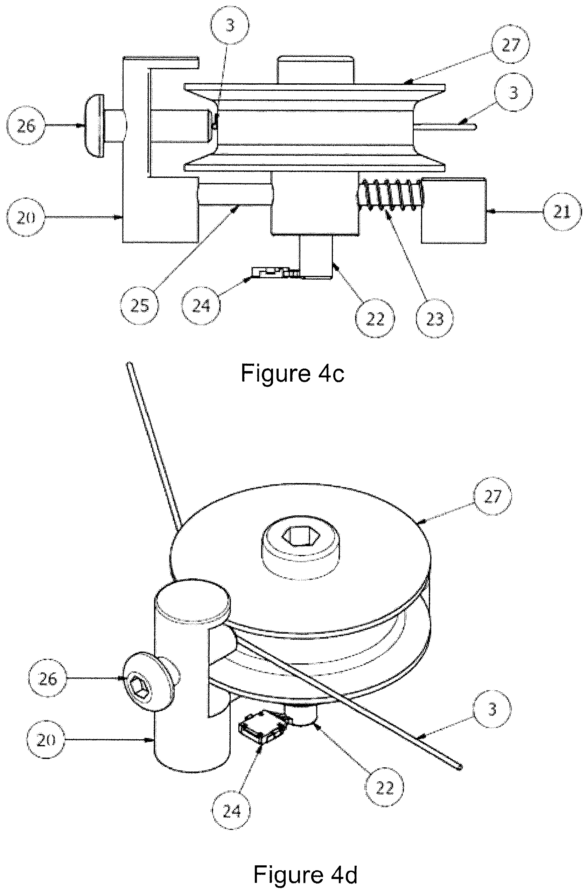

Figures 4c and 4d show, respectively, side and perspective views of the RTC unit 400 in an active (i.e. activated) state, i.e. when the rope 3 is free of any load (i.e. tension) or if the tension experienced by the rope 3 is below a certain predetermined threshold.

In the active state of the RTC unit 400, the rope 3 is, in this example, clamped between the flat end screw 26 and the rope guide wheel 27. The switch 24 is activated by the activation pin 22 of the RTC unit 400.

As outlined above, implementations in which the winch comprises an RTC unit 400 provides for various practical advantages. For instance, it may be prevented that the rope 3 will jump out of the rope drum 2 during transportation of the winch (no load or a load below a certain threshold is attached to the winch and the power of the winch is switched off). The rope may hereby be automatically clamped between the flat end screw 26 and the rope guide wheel 27.

A further advantage is that the winch may be prevented from starting to run without a load (object) being attached thereto, such that the rope 3 will not jump out of the rope drum 2.

Further still, if the object (load) touches the ground or another object during movement, the winch can be triggered to stop working, i.e. to raise or lower the object further.

As outlined above, the flat end screw 26 allows for regulating the gap between the flat end screw 26 and the rope guide wheel 27 depending on a diameter or thickness of the rope 3 in a direction generally parallel to the flat end screw 26.

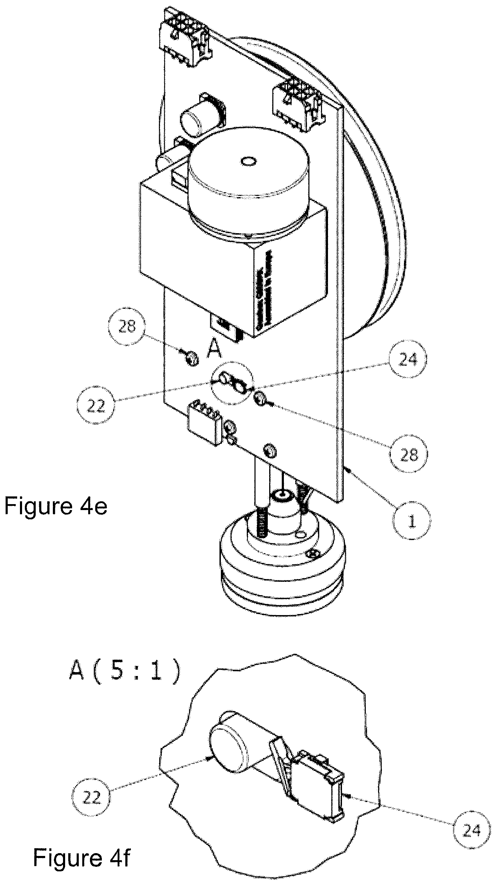

Figure 4e shows a schematic perspective view of how the RTC unit 400 may, according to some example implementations, be arranged on the support frame 1.

In this example, the support frame 1 comprises a printed circuit board, which may be particularly suitable for a (relatively) small winch.

The RTC unit 400 is mounted on the support frame 1 using multiple mounting screws 28.

Figure 4f depicts an expanded view of the schematic illustration of the RTC unit 400. In the scenario shown in Figure 4f, the RTC unit 400 is in the deactivated state, in which an object is attached to the rope 3 and the switch 24 is in the OFF state (i.e. the deactivated state). As can be seen in Figure 4f, the activation pin 22 is disconnected from the switch 24.

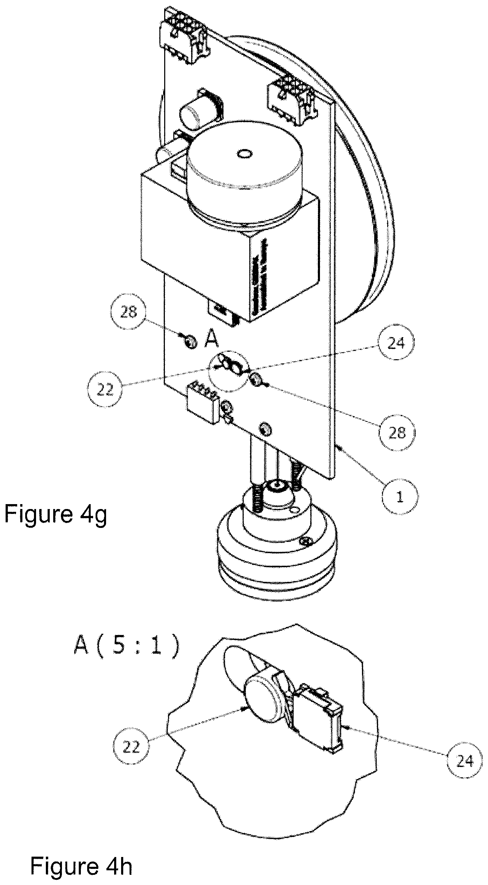

Figure 4g shows a schematic perspective view of the RTC unit 400 in the active state.

Figure 4h depicts an expanded view of the schematic illustration of the RTC unit 400. In the scenario shown in Figure 4h, the RTC unit 400 is in the activated state, in which no object is attached to the rope 3 (or the tension experienced by the rope 3 is below a certain predetermined threshold) and the switch 24 is in the ON state (i.e. the activated state). As can be seen in Figure 4h, the activation pin 22 is in contact with the switch 24.

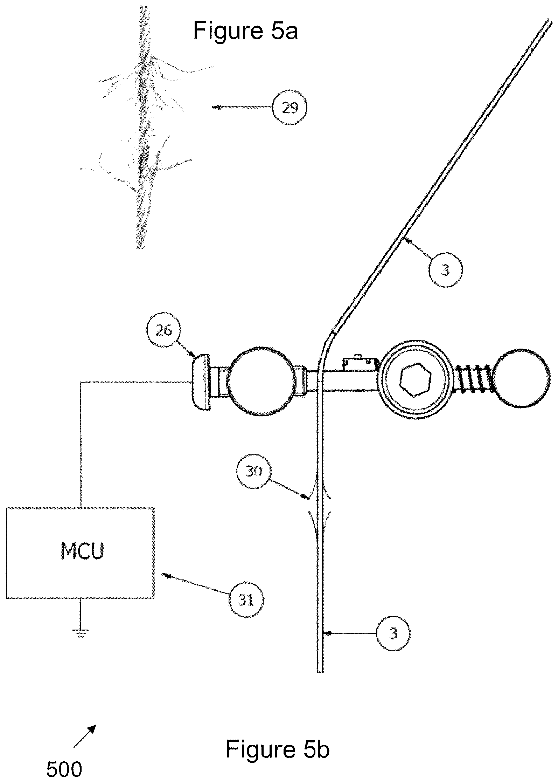

Figure 5a shows a rope 3 with broken strands 29, which may be detected according to some example implementations of the RTC unit as described herein.

Figure 5b shows a schematic illustration of a unit 500 which is configured to detect a rope 3 with broken strands 30.

As will be appreciated, the rope 3 may wear over time or may break, as shown in Figure 5a. The RTC unit may be able to determine as to whether the rope 3 comprises such broken strands 30.

In this example, the rope 3 is electrically connected to ground (GND) through the gearbox and the motor. The flat end screw 26 is, in this example, electrically connected to the microcontroller (MCU) 31. When the switch 24 is in the OFF state, the MCU 31 monitors if an electrical contact is established between the flat end screw 26 and the rope broken strands 30. Such an electrical contact may occur during rope up/down movement. If such an electrical contact is detected, the MCU 31 may react accordingly by, for example, stopping the winch from raising or lowering the rope 3 further, and/or indicating to a user of the winch via optical means, such as, but not limited to LEDs, that the rope 3 comprises broken strands 30, and/or sending data to a central controller which may be monitored.

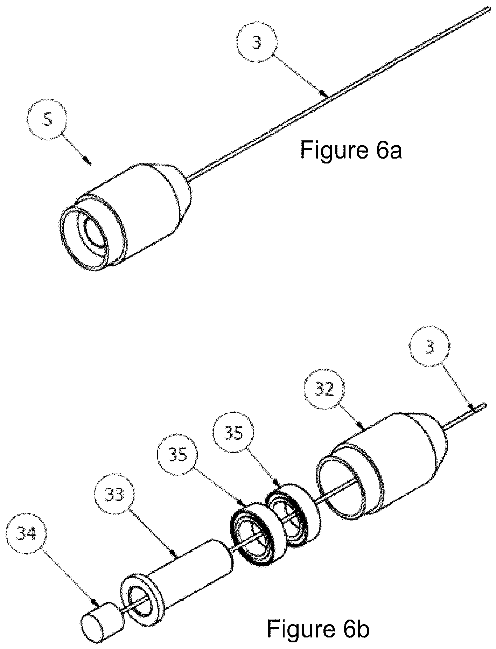

Figure 6a shows a schematic illustration of a load spin prevention device 5 according to some example implementations as described herein.

In this example, the load spin prevention device 5 serves to attach an object (load) to the winch and to prevent the object from spinning around a vertical axis, defined by the rope 3, during movement of the object. This may be particularly advantageous as the rope 3 may twist during roll up/down, which may force the object to rotate with the rope 3. Strands of the rope 3 may be untwisted by varying the rotation speed of winding/unwinding the rope 3 accordingly.

Figure 6b shows a schematic illustration in which the load spin prevention device 5 is dismantled.

In this example, the load spin prevention device 5 comprises a lock unit 32 which may be used to attach the object (load). A support member 33 is placed between ball bearings 35 and the rope end ferrule 34 of the load spin prevention device 5.

The ball bearings 35 serve to disconnect the object from the rope 3 such that twisting of the object during movement is minimized or entirely prevented.

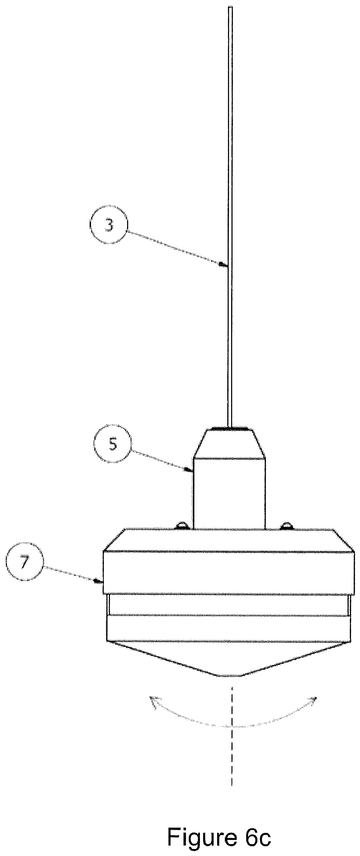

Figure 6c shows a schematic illustration of an object 7 being attached to the load spin prevention device 5. The rotation of the object around the axis as defined by the rope 3 is prevented according to example implementations as described herein.

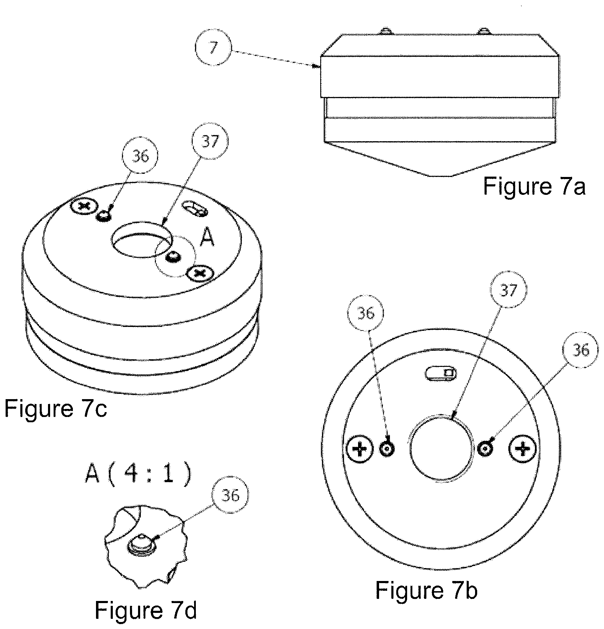

Figures 7a to 7d show various views of an object 7 according to some example implementations as described herein.

In this example, the object 7 comprises electrical contacts 36. The object is, in this example, battery-powered.

The object 7 may be, for example, a microphone, a video camera, a level sensor, or a lighting device. However, it will be appreciated that other objects may be raised or lowered via the winch.

The battery of the object 7 may need to be charged from time to time. Charging of the battery of the object 7 may be performed when the object 7 reaches the OPD unit. Then, the MCU 31 can be used to measure the battery level so that it may be determined as to whether the battery should be charged and/or changed.

The MCU 31 may be used to obtain further information regarding the battery, such as, but not limited to a charging time, a current used to charge the battery, and other parameters. If, for example, the battery is not completely charged, the winch may be prevented from starting to raise or lower the object. Any such instructions may be stored and processed in the MCU 31.

In this example, the object 7 comprises a connecting hole 37 via which the object 7 may be attached to the lock unit 32 of the winch.

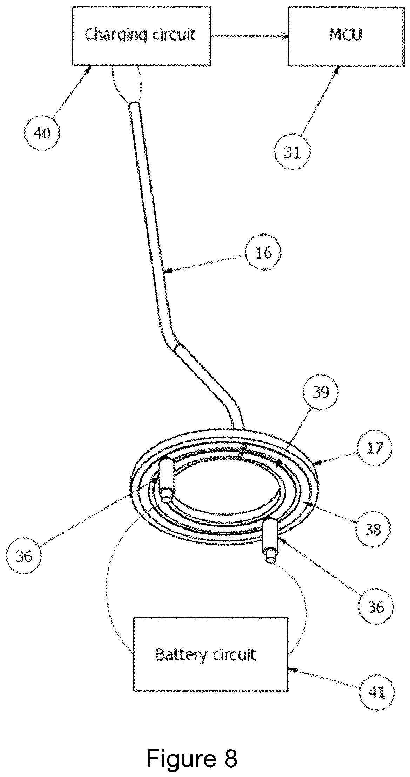

Figure 8 shows a schematic illustration of parts of the system according to some example implementations as described herein.

In this example, the object is merely represented by the electrical contacts 36 and the battery circuit 41.

First 38 and second 39 conductors are provided via which the charging circuit 40 may charge the battery of the object. Given the circular arrangement of the power supply board 17 and its electrical contacts and the corresponding arrangement of the electrical parts of the object, the object may be charged irrespective of the rotational orientation of the object with respect to the load spin prevention device. Therefore, even though the object rotational position relative to the power supply board 17 may be unknown, the battery of the object is chargeable.

The power supply board 17 has, in this example, circular contacts 38 and 39 which have different polarities (+ and -). The contacts 36 also relate to different poles (+ and -) and are located on the object in such a manner that a contact on the printed circuit board which provides, for example, a positive voltage will be in contact with the corresponding, respective contact 36 which relates to the positive pole.

In this example, the charging circuit 40 is coupled to the MCU 31, such that the MCU 31 may be used to control charging the battery of the object.

It is to be noted that any references throughout the present disclosure as to an object or load being moved upwards/downwards will equally be applicable to scenarios in which the object or a load is moved (at least partially) in a horizontal direction.

No doubt many other effective alternatives will occur to the skilled person. It will be understood that the invention is not limited to the described embodiments and encompasses modifications apparent to those skilled in the art and lying within the scope of the claims appended hereto.

## Claims

1. A winch (100) comprising an overwinding prevention, OP, unit (200), wherein the OP unit (200) comprises:
an OP trigger (8) for triggering preventing a load from being raised further by the winch (100);
an OP trigger activator, OPTA, moveable between a first OPTA position and a second OPTA position relative to the OP trigger (8);
wherein the OP trigger (8) is in a deactivated state when the OPTA is in the first OPTA position, and wherein the OP trigger (8) is in an activated state, to trigger preventing the load from being raised further by the winch (100), when the OPTA is in the second OPTA position;
wherein the OPTA is contactable by the load such that the OPTA is moveable from the first OPTA position to the second OPTA position upon the load being raised by the winch (100); **characterized in that** the winch (100) is configured to automatically lower the load upon activation of the OP trigger (8); and
wherein the winch (100) further comprises a load spin prevention device (5) configured to decouple the load to be raised by the winch (100) from the rope (3) of the winch (100).

2. A winch (100) as claimed in claim 1, wherein the OP unit (200) further comprises one or more resilient members (14) configured to bias the OPTA towards the first OPTA position.

3. A winch (100) as claimed in any preceding claim, comprising a rope tension control, RTC, unit (400) for determining a tension experienced by a rope (3) of the winch (100), wherein the RTC unit (400) comprises:
an RTC trigger (24) for triggering preventing the winch (100) from further winding or unwinding the rope (3); and
an RTC trigger activator, RTCTA, moveable between a first RTCTA position and a second RTCTA position relative to the RTC trigger (24);
wherein the RTC trigger (24) is in a deactivated state when the RTCTA is in the first RTCTA position, and wherein the RTC trigger (24) is in an activated state, to trigger preventing the winch (100) from further winding or unwinding the rope (3), when the RTCTA is in the second RTCTA position; and
wherein the RTCTA is configured to move into the second RTCTA position when the tension experienced by the rope (3) falls below a threshold tension.

4. A winch (100) as claimed in claim 3, wherein the RTC unit (400) further comprises a resilient RTC member (23) configured to bias the RTCTA towards the second RTCTA position.

5. A winch (100) as claimed in claim 4, further comprising:
a rope guide wheel (27) for receiving the rope (3) of the winch (100); and
a stop member (26) for clamping the rope (3) between the rope guide wheel (27) and the stop member (26) when the RTCTA is in the second RTCTA position.

6. A winch (100) as claimed in claim 5, wherein the stop member (26) is moveable between different stop member positions, relative to a position of the rope guide wheel (27), based on a diameter or thickness of the rope (3).

7. A winch (100) as claimed in any one of claims 3 to 6, wherein the RTC trigger (24) is arranged on a printed circuit board comprised in a support frame (1) for supporting the RTC unit (400).

8. A winch (100) as claimed in any one of claims 3 to 7, wherein the RTC unit (400) further comprises a rope deterioration detection unit (500) configured to detect a deterioration of the rope (3) based on an electrical contact being established between the stop member (26) and the rope (3) when the RTC trigger (24) is in the deactivated state.

9. A winch (100) as claimed in claim 8, wherein the rope deterioration detection unit (500) is further configured to stop the winch (100) from winding or unwinding the rope (3) and/or trigger an alarm upon detection of the electrical contact being established between the stop member (26) and the rope (3) when the RTC trigger (24) is in the deactivated state.

10. A winch (100) as claimed in any preceding claim, comprising an annular body (12) which comprises a power supply board (17), wherein the power supply board (17) comprises substantially circular electrical contacts (38, 39) contactable by the load and configured to supply an electrical voltage to the load.

11. A winch (100) as claimed in claim 10, when dependent on claim 2, wherein the one or more resilient members (14) are configured to stabilize the annular body (12) upon the load being raised or lowered by the winch (100).

12. A winch (100) as claimed in claim 10 or 11, further comprising a charging unit (31, 40) configured to charge a battery (41) of the load via the circular electrical contacts (38, 39).

13. A system comprising:
the winch (100) of any one of the preceding claims, when dependent from or in combination with claim 10, wherein the winch (100) comprises a load holder (5); and
a load (7) attached to the load holder (5), wherein the load (7) comprises load electrical contacts (36) and a load battery (41);
wherein the system is configured, when the load (7) is in contact with the OP unit (200), to charge the load battery (41) based on the load electrical contacts (36) being brought into contact with the substantially circular electrical contacts (38, 39) of the power supply board (17).

## Patentansprüche

1. Winde (100), umfassend eine Überwindungsverhinderungs-, OP, Einheit (200), wobei die OP-Einheit (200) umfasst:
einen OP-Trigger (8) zum Triggern, dass verhindert wird, dass eine Last von der Winde (100) weiter angehoben wird;
einen OP-Triggeraktivator, OPTA, der zwischen einer ersten OPTA-Position und einer zweiten OPTA-Position relativ zum OP-Trigger (8) beweglich ist;
wobei sich der OP-Trigger (8) in einem deaktivierten Zustand befindet, wenn sich der OPTA in der ersten OPTA-Position befindet, und wobei sich der OP-Trigger (8) in einem aktivierten Zustand befindet, um zu verhindern, dass die Last von der Winde (100) weiter angehoben wird, wenn sich der OPTA in der zweiten OPTA-Position befindet;
wobei der OPTA durch die Last so berührbar ist, dass der OPTA von der ersten OPTA-Position zur zweiten OPTA-Position beweglich ist, wenn die Last durch die Winde (100) angehoben wird;
**dadurch gekennzeichnet, dass**
die Winde (100) eingerichtet ist, um die Last bei Aktivierung des OP-Triggers (8) automatisch abzusenken; und
wobei die Winde (100) ferner eine Lastspinnverhinderungsvorrichtung (5) umfasst, die eingerichtet ist, um die von der Winde (100) anzuhebende Last vom Seil (3) der Winde (100) zu entkoppeln.

2. Winde (100) nach Anspruch 1, wobei die OP-Einheit (200) ferner ein oder mehrere elastische Elemente (14) umfasst, die eingerichtet sind, um den OPTA in Richtung der ersten OPTA-Position vorzuspannen.

3. Winde (100) nach einem der vorhergehenden Ansprüche, umfassend eine Seilspannungssteuerungs-, RTC, Einheit (400) zum Bestimmen einer Spannung, die ein Seil (3) von der Winde (100) erfährt, wobei die RTC-Einheit (400) umfasst:
einen RTC-Trigger (24) zum Triggern, die Winde (100) daran zu hindern, das Seil (3) weiter auf- oder abzuwickeln; und
einen RTC-Triggeraktivator, RTCTA, der zwischen einer ersten RTCTA-Position und einer zweiten RTCTA-Position relativ zum RTC-Trigger (24) beweglich ist;
wobei sich der RTC-Trigger (24) in einem deaktivierten Zustand befindet, wenn sich der RTCTA in der ersten RTCTA-Position befindet, und wobei sich der RTC-Trigger (24) in einem aktivierten Zustand befindet, um zu verhindern, dass die Winde (100) das Seil (3) weiter auf- oder abwickelt, wenn sich der RTCTA in der zweiten RTCTA-Position befindet; und
wobei der RTCTA eingerichtet ist, um sich in die zweite RTCTA-Position zu bewegen, wenn die Spannung, die das Seil (3) erfährt, unter eine Schwellenspannung fällt.

4. Winde (100) nach Anspruch 3, wobei die RTC-Einheit (400) ferner ein elastisches RTC-Element (23) umfasst, das eingerichtet ist, um den RTCTA in Richtung der zweiten RTCTA-Position vorzuspannen.

5. Winde (100) nach Anspruch 4, ferner umfassend:
ein Seilführungsrad (27) zum Aufnehmen des Seils (3) der Winde (100); und
ein Anschlagelement (26) zum Festklemmen des Seils (3) zwischen dem Seilführungsrad (27) und dem Anschlagelement (26), wenn sich der RTCTA in der zweiten RTCTA-Position befindet.

6. Winde (100) nach Anspruch 5, wobei das Anschlagelement (26) zwischen verschiedenen Anschlagelementpositionen relativ zu einer Position des Seilführungsrads (27) basierend auf einem Durchmesser oder einer Dicke des Seils (3) beweglich ist.

7. Winde (100) nach einem der Ansprüche 3 bis 6, wobei der RTC-Trigger (24) auf einer Leiterplatte angeordnet ist, die in einem Trägerrahmen (1) zum Tragen der RTC-Einheit (400) enthalten ist.

8. Winde (100) nach einem der Ansprüche 3 bis 7, wobei die RTC-Einheit (400) ferner eine Seilverschlechterungserfassungseinheit (500) umfasst, die eingerichtet ist, um eine Verschlechterung des Seils (3) basierend auf einem elektrischen Kontakt zu erfassen, der zwischen dem Anschlagelement (26) und dem Seil (3) hergestellt wird, wenn sich der RTC-Trigger (24) im deaktivierten Zustand befindet.

9. Winde (100) nach Anspruch 8, wobei die Seilverschlechterungserfassungseinheit (500) ferner eingerichtet ist, um die Winde (100) daran zu hindern, das Seil (3) aufzuwickeln oder abzuwickeln, und / oder einen Alarm bei Erkennung, dass der elektrische Kontakt zwischen dem Anschlagelement (26) und dem Seil (3) hergestellt wird, auszulösen, wenn sich der RTC-Trigger (24) im deaktivierten Zustand befindet.

10. Winde (100) nach einem der vorhergehenden Ansprüche, umfassend einen ringförmigen Körper (12), der eine Stromversorgungsplatine (17) umfasst, wobei die Stromversorgungsplatine (17) im Wesentlichen kreisförmige elektrische Kontakte (38, 39) umfasst, die durch die Last berührbar sind und eingerichtet sind, um der Last eine elektrische Spannung zuzuführen.

11. Winde (100) nach Anspruch 10, wenn abhängig von Anspruch 2, wobei das eine oder die mehreren elastischen Elemente (14) eingerichtet sind, um den ringförmigen Körper (12) zu stabilisieren, wenn die Last von der Winde (100) angehoben oder abgesenkt wird.

12. Winde (100) nach Anspruch 10 oder 11, ferner umfassend eine Ladeeinheit (31, 40), die eingerichtet ist, um eine Batterie (41) der Last über die kreisförmigen elektrischen Kontakte (38, 39) zu laden.

13. System umfassend:
die Winde (100) nach einem der vorhergehenden Ansprüche, wenn abhängig von oder in Kombination mit Anspruch 10, wobei die Winde (100) einen Lasthalter (5) umfasst; und
eine Last (7), die an dem Lasthalter (5) angebracht ist, wobei die Last (7) elektrische Lastkontakte (36) und eine Lastbatterie (41) umfasst;
wobei das System eingerichtet ist, wenn die Last (7) mit der OP-Einheit (200) in Kontakt steht, um die Lastbatterie (41) basierend auf den elektrischen Lastkontakten (36) zu laden, die mit den im Wesentlichen kreisförmigen elektrischen Kontakten (38, 39) der Stromversorgungsplatine (17) in Kontakt gebracht werden.

## Revendications

1. Treuil (100) comprenant une unité évite-molettes, OP, (200), l'unité OP (200) comprenant :
un déclencheur OP (8) servant à éviter qu'une charge ne soit davantage soulevée par le treuil (100) ; et
un actionneur de déclencheur d'OP, OPTA, mobile entre une première position OPTA et une seconde position OPTA par rapport au déclencheur OP (8) :
le déclencheur OP (8) étant désactivé lorsque l'OPTA se trouve dans la première position OPTA, et le déclencheur OP (8) étant activé, servant à éviter que la charge ne soit davantage soulevée par le treuil (100), lorsque l'OPTA est dans la seconde position OPTA ;
l'OPTA pouvant entrer en contact avec la charge de sorte que l'OPTA puisse passer de la première position OPTA à la seconde position OPTA dès que la charge est soulevée par le treuil (100), **caractérisé en ce que**
le treuil (100) est conçu pour abaisser automatiquement la charge au moment de l'activation du déclencheur OP (8) ; et
le treuil (100) comprenant en outre un dispositif de prévention de rotation de charge (5) conçu pour détacher la charge à soulever par le treuil (100) du câble (3) du treuil (100).

2. Treuil (100) selon la revendication 1, l'unité OP (200) comprenant en outre un ou plusieurs éléments élastiques (14) conçus pour solliciter l'OPTA en direction de la première position OPTA.

3. Treuil (100) selon l'une quelconque revendication précédente, comprenant une unité de réglage de tension de câble (400), RTC, pour déterminer la tension exercée par un câble (3) du treuil (100), l'unité RTC (400) comprenant :
un déclencheur RTC (24) pour empêcher le treuil (100) de poursuivre l'enroulement ou le déroulement du câble (3) ; et
un actionneur de déclencheur RTC, RTCTA, mobile entre une première position RTCTA et une seconde position RTCTA par rapport au déclencheur RTC (24) ;
le déclencheur RTC (24) étant désactivé lorsque le RTCTA se trouve dans la première position, et le déclencheur RTC (24) est activé, pour empêcher le treuil (100) de poursuivre l'enroulement ou le déroulement du câble (3) lorsque le RTCTA se trouve dans la seconde position RTCTA ; et
le RTCTA étant conçu pour se déplacer dans la seconde position RTCTA lorsque la tension exercée par le câble (3) chute en dessous d'une tension seuil.

4. Treuil (100) selon la revendication 3, l'unité RTC (400° comprenant en outre un élément RTC élastique (23) pour solliciter le RTCTA en direction de la seconde position RTCTA.

5. Treuil (100) selon la revendication 4, comprenant en outre :
Une roue de guidage de câble (27) pour recevoir le câble (3) du treuil (100) ; et
Un élément d'arrêt (26) pour serrer le câble (3) entre la roue de guidage de câble (27) et l'élément d'arrêt (26) lorsque le RTCTA se trouve dans la seconde position RTCTA.

6. Treuil (100) selon la revendication 5, l'élément d'arrêt (26) pouvant se déplacer entre différentes positions d'élément d'arrêt, par rapport à une position de la roue de guidage de câble (27), sur la base d'un diamètre ou une épaisseur du câble (3).

7. Treuil (100) selon l'une quelconque des revendications 3 à 6, le déclencheur RTC (24) étant disposé sur une carte de circuit imprimé comprise dans un cadre support (1) destiné à supporter l'unité RTC (400).

8. Treuil (100) selon l'une quelconque des revendications 3 à 7, l'unité RTCTA (400) comprenant en outre une unité de détection de détérioration de câble (500) conçu pour détecter une détérioration du câble (3) en fonction d'un contact électrique établi entre l'élément d'arrêt (26) et le câble (3) lorsque le déclencheur RTC (24) est désactivé.

9. Treuil (100) selon la revendication 8, l'unité de détection de détérioration de câble (500) étant en outre conçue pour arrêter le treuil (100) d'enrouler ou de dérouler le câble (3) et/ou de déclencher une alarme dès la détection du contact électrique établi entre l'élément d'arrêt (26) et le câble lorsque le déclencheur RTC (24) est désactivé.

10. Treuil (100) selon l'une quelconque revendication précédente, comprenant un corps annulaire (12) qui comprend un tableau d'alimentation électrique (17), le tableau d'alimentation électrique (17) comprenant essentiellement des contacts circulaires électriques (38, 39) pouvant être mis en contact avec la charge et conçus pour alimenter la charge en tension électrique.

11. Treuil (100) selon la revendication 10, lorsqu'elle est dépendante de la revendication 2, ledit ou lesdits éléments élastiques (14) étant conçu(s) pour stabiliser le corps annulaire (12) au moment où la charge est soulevée ou abaissée par le treuil (100).

12. Treuil (100) selon la revendication 10 ou la revendication 11, comprenant en outre une unité de recharge (31, 40) conçue pour recharger une batterie (41) de la charge par l'intermédiaire des contacts circulaires électriques (38, 39).

13. Système comprenant :
le treuil (100) selon l'une quelconque des revendications précédentes, lorsqu'elle est dépendante de la revendication 10 ou qu'elle est en association avec cette dernière, le treuil (100) comprenant un support de charge (5) ;
et
une charge (7) fixée au support de charge (5), la charge (7) comprenant des contacts électriques de charge (36) et une batterie rechargeable (41) ;
le système étant conçu, lorsque la charge (7) est en contact avec l'unité OP (200), pour recharger la batterie rechargeable (41) sur la base des contacts annulaires électriques (36) étant amenés en contact avec les contacts électriques essentiellement circulaires (38, 39) du tableau d'alimentation électrique (17).
